# EUROPEAN PATENT SPECIFICATION

(11) **EP 2 704 885 B1**
(45) Date of publication and mention of the grant of the patent: **23.03.2016**
(21) Application number: 12725165.0
(22) Date of filing: 26.04.2012
(51) Int. Cl.: B28B 23/00, G02B 6/50

(54) **METHOD FOR THE APPLICATION OF OPTICAL FIBRES IN MOLDABLE MATERIALS AND MATERIALS THUS OBTAINED**
VERFAHREN ZUM AUFBRINGEN VON OPTISCHEN FASERN BEI FORMBAREN MATERIALIEN UND SO GEWONNENE MATERIALIEN
PROCÉDÉ POUR L'APPLICATION DE FIBRES OPTIQUES DANS DES MATIÈRES MOULABLES ET MATIÈRES OBTENUES PAR CE MOYEN

(30) Priority: 06.05.2011 PT 2011105674
(43) Date of publication of application: 12.03.2014
(73) Proprietor: Secil S.A. Companhia geral de cal e cimento, 2901-864 Setúbal (PT)
(72) Inventor: JESUS DE SEQUEIRA SERRA NUNES, Angela Maria, 2925-181 Azeitão (PT)
(74) Representative: Pereira da Cruz, Joao
(86) International application number: PCT/PT2012/000017
(87) International publication number: WO 2012/154069

(56) References cited:
- WO-A1-2008/049432
- WO-A2-2009/156684
- DE-A1-102007 015 838
- GB-A- 2 364 265
- US-A- 4 885 663
- US-A1- 2004 032 748
- US-A1- 2007 074 484

## Description

### Scope of the invention

This invention relates to a method for the application of optical fibres in moldable materials, as in claim 1, as well as to pixelized materials as in claim 3 which are obtained by the use of optical fibres, allowing light, data and information in general to pass through an opaque element in an almost imperceptible way, without significantly changing the appearance of its surface.

This can be a two-way passing through, i.e. from the inner interface to the outer surface or vice-versa, from the outside towards the inside.

The system is implemented by the transmitting end of the optical fibres being systematically distributed along the surface of the material in order to create a pixelized surface which can be read as a screen, providing the surfaces with a number of new and varied light effects which will allow several events to occur, from communication and conveyance of messages to signalling and colour changing at the surface.

The fibre terminals, when duly connected to a computer system provided with a LED-light switch and adequately programmed for that purpose, will allow the aforementioned effects to be produced.

This technique can be applied to different materials such as concrete (concrete walls or parts, namely along the façades of buildings, on bridges and viaducts, pavements, mortar linings, prefabricated concrete pieces, cement wood panels) or other cementitious materials produced from other binders such as plaster.

### State of the art

The currently existing lighting and signalling systems are networks completely exogenous to the material, which are normally envisaged before the preparation, application, mounting and concreting of the same.

Usually, the said systems are installed through negatives in order to create "hollows" wherein the systems are subsequently embedded on the final phase of assembly and finishing. In most cases, these systems are arranged a *posteriori* by superficial external fixing elements, not being an integral part of the material.

Very often, the installation of these systems is reasonably perceptible on the surface of the material, leaving undesirable marks from the aesthetical point of view.

On the other hand, according to the patent EP 1532325, the optical fibre has already been used also in concrete, but with the purpose of allowing light to generally pass through so as to obtain a transparency effect of the concrete. This technology named Litacron aims at producing translucent concrete in prefabricated pieces, i.e. concrete which allows the light to pass through broadly along the surface of the piece, without a specific orientation. Actually, the positioning adopted by Litacron allows the light to pass through the piece without producing an oriented effect of the same, thus not anticipating the possibility of the material being used as a pixelized screen aimed at communicating towards the outside.

### Detailed description of the invention

### Technical problem - Benefits

To date, the transmission of information, in the form of data, light and energy conduction in ceramic, isolating and opaque materials is very limited. In fact, making light to pass through a system which is endogenous to the material represents a benefit with usefulness and a number of applications ranging from energy efficiency, to safety, communication, and aesthetical value.

### Technical solution

Before application, cold moldable materials can be crossed over by optical fibre beams which, if installed in such a way so as to produce a uniform distribution of points in the outer surface of the material, enable the creation of a screen with the desired size and resolution, according to the number of distributed fibres per surface area unit of the material.

The terminals of these fibres can be connected to several systems, such as computer devices for data transfer, light switch terminals, namely LEDS, and terminals interconnected to sensor systems, voltaic cells, and the like.

These systems can act as a communication vehicle by using the other side of the material surface, giving it the capacity of transmitting light to the opaque surface, thus conveying data through the outer surface towards the inside or emitting light from the inner LED-systems to the outside.

The simultaneous use of end transmitting and lateral transmitting fibres (FODLL 1 and 2mm) allows superficial effects to be produced such as a change in the colour of the material's surface by the refraction of light transmitted to the outside, at a short distance of the outer surface of the material.

External walls of buildings and constructions, namely the ones in concrete, being significantly exposed surfaces with a strong predominance in our urban environment, can be highly benefited with this technique from the aesthetical and functional perspective, since they can act as a basis of communication with transients in addition to other functions which are also advantageous, such as warning signs, or simply as architectural and decorative aesthetic effects aimed at improving urban areas.

In what concerns other materials, in particular more ductile and flexible materials such as rubbers and isolating layers made from EPS, polyurethane or the like, beams can be inserted into the pieces by mechanical insertion and threading similarly to the above described method. but not forming part of the present invention.

### Relative and economic advantages

The innumerable advantages brought by the application of this technique are directly associated with the benefits of using a system which remains unaltered over time and is endogenous to the material, its aging occurring in line with the aging of the material itself. Therefore, its operational availability is permanent.

### Description of the method

The method of application is defined in claim 1. In cold moldable materials, such as concrete or other cementitious materials produced from other binders such as plaster, the optical fibre beams are assembled in a first stage of preparation of the formwork. The fibres application is prepared previously to the concreting, as well as the steel framework. This work can be done in different ways. The most simple is perhaps the one in which the assembly of the fibre beams is previously prepared, by heat sealing or by sticking of the terminals to a plasticized film which will coat the surface of the formwork, in order to distribute the fibre according to the preset network mesh, aiming at obtaining the desired pixelization effect in targeted areas, i.e. at a specific distance between the links of the network mesh.

In addition to this fastening by heat sealing or by sticking to the coating film, other systems may co-exist for fixing the fibre beam terminals to the outer panel of the formwork by mechanical means, i.e. small anchoring parts which will be cut after concreting and upon removal of the formwork.

All the preparation works prior to concreting are carried out simultaneously, i.e. conventional framework assembly and pre-stress, if applicable, eventual installation of "Tremi" tubes for the concrete to be discharged during concreting, insertion of spacers in order to meet the needs as regards the blinding of the frameworks, and all the remaining accessories required for the correct concreting of the piece.

The next step consists of concreting the piece by the conventional means, taking some extra care so as to not cause damage to the beams or displace them from their original positions, in order to not interfere with the intended final effect.

Subsequently to concreting, the formwork will be normally removed after the required hardening period. The terminals of the beams on the backside of the piece will be connected to an electronic LED-light system or other previously provided system, while the terminals in the surface of the piece should be arranged in order to obtain the desired light transmission to each one of the cables (unit - pixel).

When the desired effect is uniquely to change the colour of the concrete by lateral transmission of coloured light, a FODLL-type lateral transmission fibre is applied and its installation shall be made using spacers in order to ensure an homogeneous position next to the facing block, in such a way that the blinding layer of the fibre is in accordance with the desired intensity of transmitted light, so as to produce the intended effect of colour changing on the wall surface.

Said embodiment does however not form part of the present invention as defined in the appended claims.

### Industrial Use

The following are some examples of possible applications of this technology:

### Pixelization of surfaces

Benefits:
Communication/ Safety/ Architectural effects

To provide the facings of interactive surfaces with the possibility of communicating towards the outside based on previously configured LED-lights which are interconnected to automated computer information systems. Lighting, whose operation which is controlled by the information system, is conducted by the optical fibre towards the surface of the material turning it into a communication surface/platform.

This communication platform, when associated to sensor systems aimed at detecting information, can be managed by a centralized system which will process alert messages susceptible of being transmitted by the lighting system and, therefore, acts as a large warning surface.

Some examples of application are related to road, aeronautical or pedestrian pavements wherein piezoelectric, speed and braking cells, as well as movement, light and sound sensors, etc., are able to detect the signal and communicate with the central system which presets alert messages from the activation of LEDS, whose light is conducted by the optical fibre through the inner section of the material towards the outer surface in order to allow a message to be displayed and viewed by drivers. Simple messages such as "over speed warning" or "dangerous driving" or "stop immediately due to approaching vehicle" are some of the possible examples.

These systems may obviously be extended to vertical surfaces such as facings, walls, or other.

### Changing the colour of surfaces

Another possible application will be the light-emitting effect produced by end transmitting and lateral transmitting fibres which are installed a few microns from surfaces, namely the ones made of concrete, mortar, wood composite boards, cement wood, plaster or other, and which, if connected to light-emitting LED systems, will allow the colour shade in the surface to be varied by diffuse radiation of the said light next to the material's surface. This effect gives the perception of the colour changing at the surface, allowing colour dynamic effects to be produced, as well as shadings or tones.

This effect in buildings and facings can be of interest from the architectural point of view, since it represents an interesting dynamic approach to be explored in building façades and urban environments.

### Absorption of external radiation

Another envisaged application is the possibility of conducting the outer light towards the inside of the material, facing or surface. In fact, solar light can be driven by the fibre and provide an internal lighting from an opaque material. The intensity of the said light will depend on the selected pixelization, i.e. on the fibre area by surface unit.

### Electric power generation

By allowing the solar light to be received inside the material, facing or surface, it is possible to interconnect the beams of the solar light receptor fibre cables to small-sized photovoltaic cells, which are thereby fed so that power can be generated.

In fact, by using this system, it is possible to turn the walls of concrete buildings, for instance, into large production areas for power micro-generation, which will supply internal consumption sources in an almost imperceptible way and without altering or disfiguring the façades with different panel systems designed for the same purpose.

### Structural monitoring

The aforementioned system may also be advantageous in the context of monitoring systems, by emitting light signals through the fibre which will provide instantaneous monitoring of a given structure.

### Specific examples - General applications:

- Walls and pavements, or other structural elements being concreted *in situ* or prefabricated in concrete or other materials, such as ceramic, plasters and a multitude of panels.
- Building façades (large façade components or prefabricated panels),
- Superstructures of viaducts and border beams
- Road, pedestrian and aeronautical pavements in concrete, both urban and non-urban.
- Information plates
- Street furniture
- Decorative elements for indoor and outdoor spaces
- Tilings and coating materials

### Pixelized materials

The invention further relates to pixelized materials as in claim 3 to be obtained by the above method. The light is able to pass through the material, from the inner interface to the outer surface or, vice-versa, from the outside towards the inside.

The terminals of the end transmitting fibre beams are connected to computer devices for data transfer, light switch terminals, terminals interconnected to sensor systems, or photovoltaic cells.

As can be concluded from the present invention end transmitting and lateral transmitting fibres are simultaneously used.

## Claims

1. A method for the application of optical fibres in cold moldable materials such as concrete or other cementitious materials produced from other binders such as plaster, the said method comprising:
- in a first stage of preparation of the formwork, optical end transmitting fibre beams are mounted in such a way as to produce an uniform distribution of points in the outer surface of the material, according to a preset network mesh aimed at obtaining the desired pixelization effect in specific targeted areas by:
• heat sealing or sticking of the terminals of the optical fibre beams to a plasticized film which will coat the formwork's surface; or
• fixing of the said terminals by mechanical means, using anchoring parts to be cut after the concreting and upon removal of the formwork;
- the concreting of the piece is carried out after the required operations of framework assembly and pre-stress;-the formwork is removed after the hardening period and the terminals of the optical fibre beams on the backside of the piece are connected to an electronic light system;
- the terminals in the surface of the piece are arranged in order to obtain the desired light transmission to each one of the cables forming one pixelized unit; **characterized in that**
in the first stage of the preparation of the formwork, lateral transmitting fibre beams are also mounted at a short distance of outer surface of the material, to allow superficial effects to be produce.

2. A method for the application of optical fibres in cold moldable materials according to the previous claim, wherein the lateral transmission fibres are FODLL-type lateral transmission fibres beams, its installation at a short distance of outer surface of the material being made using spacers in order to ensure an homogeneous position next to said outer surface .

3. Materials being pixelized by means of the use of optical fibre beams, obtained according to the method of the previous claim, said materials comprising, incorporated into an opaque element:
- end transmitting fibre beams arranged in such a way as to produce uniform distribution of points in the outer surface of the material, and
**characterized in that** it further comprises:
- lateral transmitting fibre beams arranged at a short distance of an outer surface of the materials to allow superficial effects to be produced.

4. Materials being pixelized by means of the use of optical fibre beams according tc claim 3, wherein the terminals of the end transmitting fibre beams are connected to computer devices for data transfer, light switch terminals, terminals interconnected to sensor systems, or photovoltaic cells.

5. Materials being pixelized by means of the use of optical fibre beams according to claim 3, wherein the light is able to pass through the material, from the inner interface to the outer surface or from the outside towards the inside.

## Patentansprüche

1. Verfahren für den Einsatz von optischen Fasern in kalten, formbaren Materialien, wie Beton oder andere zementartigen Materialien, die aus anderen Bindemitteln, wie Gips, hergestellt werden, wobei das Verfahren ferner umfasst:
- in einer ersten Phase der Vorbereitung der Schalung werden optische Endesendefaserbündel so montiert, dass eine gleichmäßige Verteilung von Punkten an der Außenfläche des Materials erzeugt wird, gemäß einem voreingestellten Maschennetz, welches den gewünschten Pixelierungseffekt in gezielten Zielbereichen erwirkt, indem:
• Wärmeversiegelung oder Verklebung der Anschlüsse der optischen Faserbündel an einer plastifizierten Schicht, welche die Oberfläche der Schalung beschichten wird; oder
• Befestigung der genannten Anschlüsse durch mechanische Mittel, indem man Verankerungsteile verwendet, die nach dem Betonieren und der Entfernung der Schalung geschnitten werden;
- das Betonieren des Stückes wird nach den erforderlichen Vorgängen der Rahmenkonstruktion und der Vorspannung durchgeführt;
- die Schalung wird nach der Aushärtezeit und nachdem die Anschlüsse der optischen Faserbündel an der Rückseite des Stückes an ein elektronisches Lichtsystem verbunden sind, entfernt;
- die Anschlüsse an der Oberfläche des Stückes sind so angeordnet, dass die gewünschte Lichtdurchlässigkeit an jedem der Kabel, welche eine pixelierte Einheit formen, erhalten wird;
**dadurch gekennzeichnet, dass**
in der ersten Phase der Vorbereitung der Schalung, auch seitlich Sendefaserbündel in einem kurzen Abstand zur Materialaußenfläche montiert sind, damit oberflächliche Effekte produziert werden.

2. Verfahren für den Einsatz von optischen Fasern in kalten, formbaren Materialien, nach dem vorhergehenden Anspruch, wobei die seitlichen Sendefasern FODLL-artige seitliche Sendefaserbündel sind, deren Installation in einem kurzen Abstand zur Außenfläche des Materials erfolgt, indem Abstandhalter verwendet werden, um eine homogene Positionierung zur genannten Außenfläche zu gewährleisten.

3. Materialien, die durch die Verwendung von optischen Faserbündeln pixelisiert werden, indem das Verfahren der vorhergehenden Ansprüche verwendet wird, bei den besagten Materialien ist in einem lichtundurchlässigem Element Folgendes eingebaut:
- Endesendefaserbündel, die in einer solchen Weise angeordnet sind, dass eine gleichmäßige Verteilung von Punkten an der Außenfläche des Materials erzeugt wird, und
**dadurch gekennzeichnet, dass** diese ferner umfasst:
- seitliche Sendefaserbündel, die in einem kurzen Abstand an einer Außenfläche des Materials angeordnet sind, damit oberflächliche Effekte produziert werden.

4. Materialien, die durch die Verwendung von optischen Faserbündeln nach Anspruch 3 pixelisiert werden, wobei die Anschlüsse der Endesendefaserbündel an einen Computer angeschlossen sind, um Datenübertragung, Lichtschalteranschluss, Zusammenschaltung der Anschlüsse an Sensorsysteme oder Photovoltaikzellen zu ermöglichen.

5. Materialien, die durch die Verwendung von optischen Faserbündeln nach Anspruch 3 pixelisiert werden, wobei das Licht das Material durchdringen kann, entweder aus der inneren Grenzfläche zu der Außenfläche oder von der Außenseite zur Innenseite.

## Revendications

1. Méthode d'application de fibres optiques dans des matériaux moulables à froid tels que le béton ou d'autres matériaux à base de ciment produits à partir d'autres liants tels que le plâtre, ladite méthode comprenant :
- dans une première étape de préparation du coffrage, des faisceaux de fibres optiques de transmission d'extrémité sont montés de manière à produire une distribution uniforme des points dans la surface extérieure du matériau, selon un maillage de réseau prédéfini visant à obtenir l'effet de pixellisation souhaité dans les zones spécifiques ciblées par :
• soudure thermique ou collage des bornes des faisceaux de fibres optiques à un film plastifié qui enrobera la surface du coffrage ; ou
• fixation desdites bornes par des moyens mécaniques, en utilisant des pièces d'ancrage qui seront découpées après le bétonnage et lors du retrait du coffrage ;
- le bétonnage de la pièce est réalisée après les opérations nécessaires d'assemblage de cadre et de précontrainte ;
- le coffrage est retiré après la période de durcissement et les bornes des faisceaux de fibres optiques sur le côté arrière de la pièce sont reliées à un système électronique de lumière ;
- les bornes dans la surface de la pièce sont disposées de manière à obtenir la transmission lumineuse souhaitée à chacun des câbles formant une unité pixellisée ; **caractérisée en ce que**
dans une première étape de préparation du coffrage, des faisceaux de fibres de transmission latérale sont également montés à une courte distance de la surface extérieure du matériau, de manière à produire des effets superficiels.

2. Méthode d'application de fibres optiques dans des matériaux moulables à froid selon la revendication précédente, dans laquelle les fibres de transmission latérale sont des faisceaux de fibres de transmission latérale du type FODLL, leur installation à une courte distance de la surface extérieure du matériau étant effectuée en utilisant des entretoises afin d'assurer une position homogène à côté de ladite surface extérieure.

3. Des matériaux pixellisés au moyen de l'utilisation de faisceaux de fibres optiques, obtenus selon la méthode des revendications précédentes, lesdits matériaux comprenant, incorporés dans un élément opaque :
- des faisceaux de fibres de transmission d'extrémité disposés de manière à produire une distribution uniforme des points dans la surface extérieure du matériau, et **caractérisé en ce qu'**il comprend aussi :
- des faisceaux de fibres de transmission latérale disposés à une courte distance de la surface extérieure des matériaux de manière à produire des effets superficiels.

4. Des matériaux pixellisés au moyen de l'utilisation de faisceaux de fibres optiques selon la revendication 3, où les bornes des faisceaux de fibres de transmission d'extrémité sont connectées à des dispositifs informatiques de transfert de données, des terminaux de commutation de lumière, des terminaux interconnectés à des systèmes de capteurs ou des cellules photovoltaïques.

5. Des matériaux pixellisés au moyen de l'utilisation de faisceaux de fibres optiques selon la revendication 3, où la lumière est capable de passer à travers le matériau, de l'interface interne à la surface extérieure ou de l'extérieur vers l'intérieur.
